# FASCICULE DE BREVET EUROPEEN

(11) **EP 0 851 569 B1**
(45) Date de publication et mention de la délivrance du brevet: **11.06.2003**
(21) Numéro de dépôt: 97403133.8
(22) Date de dépôt: 23.12.1997
(51) Int. Cl.: H02M 7/519, H02M 7/523

(54) **Convertisseur de puissance à commande améliorée des commutateurs principaux et avec plusieurs niveaux de tension**
Leistungswandler mit verbesserter Hauptschaltersteuerung und mehreren Spannungspegeln
Power converter with improved control of main switches and with several voltage levels

(30) Priorité: 30.12.1996 FR 9616191
(43) Date de publication de la demande: 01.07.1998
(73) Titulaire: ALCATEL, 75008 Paris (FR)
(72) Inventeur: Rudniski, David, Toronto M6P 3B2 (CA); Cazabat, Stéphane, 91300 Massy (FR); Delay, Christian, 91420 Morangis (FR); Sanhet, Jean-Louis, 91640 Fontenay Les Briis (FR)
(74) Mandataire: Pothet, Jean Rémy Emile Ludovic

(56) Documents cités:
- WO-A-92/05625
- US-A- 3 207 974
- US-A- 3 935 528
- MOK ET AL: "Control Complexities Related to High Power Resonant Inverters" PESC96 RECORD, vol. 2, 24 - 27 juin 1996, LAGO MAGGIORE, ITALY, pages 1040-1046, XP002040209
- G.A. FISHER: "High power transistor inverters - potential for single device operation at 1000 A and 800 V" PROCEEDINGS 16TH UNIVERSITIES POWER ENGINEERING CONFERENCE (UPEC), 1981, SHEFFIELD, GB, XP002040211
- MCMURRAY W: "RESONANT SNUBBERS WITH AUXILIARY SWITCHES" IEEE TRANSACTIONS ON INDUSTRY APPLICATIONS, vol. 29, no. 2, 1 mars 1993, pages 355-361, XP000369395

## Description

La présente invention concerne les convertisseurs de puissance dits à commutation douce, notamment les convertisseurs de puissance décrits dans l'article "High Power Transistor Inverters - Potential for Single Device Operation at 1000 A and 800 V", de G. A. Fisher, publié dans les minutes de la "16th Universities Power Engineering Conference", Sheffield, Grande-Bretagne, dans l'article "Resonant Snubbers with Auxiliary Switches", de W. McMurray, publié dans IEEE Transactions on Industry Applications, Vol.29, No.2, Mars/Avril 1993 et dans le document de brevet WO 92/05625.

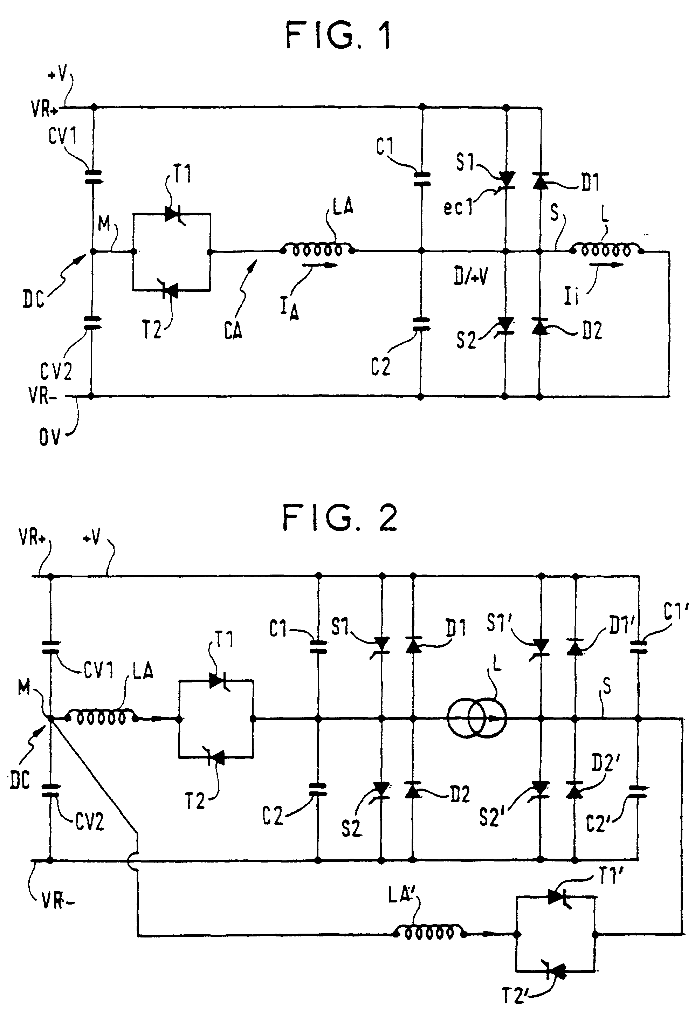

La figure 1 représente un bras de convertisseur du type décrit dans les publications mentionnées. Ce bras de convertisseur est destiné à l'alimentation d'une charge L, représentée comme essentiellement inductive, un moteur par exemple, à partir d'une source de tension continue fournie entre un rail positif VR+ et un rail négatif VR-. Il comprend essentiellement :
- deux commutateurs principaux, de type IGBT, par exemple, Si et S2, permettant de connecter respectivement une sortie S menant à la charge L, soit au rail VR+, soit au rail VR- ;
- deux diodes de roue libre D1 et D2 permettant le maintien du courant dans la charge L en couplant respectivement la sortie S soit au rail positif VR+, soit au rail négatif VR-,
- deux condensateurs de basculement (snubbers, dans la terminologie anglo-saxonne) C1 et C2 entre la sortie S et, respectivement, le rail positif VR+ et le rail négatif VR-,
- un circuit auxiliaire CA comprenant notamment une inductance auxiliaire LA en série avec deux commutateurs auxiliaires à conduction unidirectionnelle opposés T1 et T2, des thyristors par exemple, ou des circuits fonctionnellement équivalents, couplé entre la sortie S et le point milieu M d'un diviseur de tension capacitif DC ; ce dernier comprend lui-même deux condensateurs diviseurs CV1 et CV2 connectés en série entre les rails positif VR+ et négatif VR- et fournissant en ce point milieu M, nominalement, une tension médiane par rapport à celles des rails positif VR+ et négatif VR-.

Dans ce circuit, les composants S1, D1, C1, T1, CV1 sont respectivement appairés avec les composants S2, D2, C2, T2, CV2, c'est-à-dire font respectivement montre en toutes occasions des mêmes caractéristiques électriques. Un circuit de commande non représenté mesure tensions et courants en divers points du convertisseur comprenant ce bras et, selon un programme approprié, commande le déclenchement des commutateurs principaux S1 et S2 et des commutateurs auxiliaires T1 et T2, par action sur des électrodes de commande qui sont seulement esquissées sur la figure, en ec1 par exemple, de la manière qui sera maintenant décrite.

Pour illustrer le fonctionnement de ce circuit, dans le cas d'un convertisseur continu-continu, le bras de la figure 1 fonctionnant en hacheur, on partira d'un état dans lequel aucun commutateur n'est conducteur et un courant IL se maintient dans la charge L par la diode de roue libre D2 qui est alors conductrice. De ce fait, à la tension de seuil de la diode D2 près, la sortie S est au potentiel du rail VR-, 0 volt par exemple. Les condensateurs CV1 et CV2, de même capacité, sont chargés sous la tension existant entre les rails VR+ et VR-, que l'on appelera +V, de sorte que le point milieu M est à la tension médiane +V/2.

Le basculement du circuit commence par une première étape dans laquelle le commutateur auxiliaire T1 est déclenché par le circuit de commande. Il devient conducteur et l'inductance auxiliaire LA se retrouve alimentée entre +V/2 (au seuil de T1 près) et 0 V (au seuil de D2 près) ; le courant I_{A} qui la traverse croît linéairement. Ce courant se soustrait du courant I_{L} dans la diode D2.

Lorsque I_{A} = I_{L} la diode D2 se bloque. La sortie S n'est plus couplée au rail VR-. L'inductance auxiliaire LA se retrouve alors en série avec les condensateurs C1 et C2, eux-mêmes en parallèle l'un sur l'autre à son égard. Une oscillation de courant s'amorce entre l'inductance et les condensateurs. Dans la première alternance de cette oscillation, le point milieu des condensateurs de basculement C1 et C2, c'est-à-dire la sortie S, passe de 0 à +V volts.

Le commutateur S1 est alors déclenché, sans tension à ses bornes et prend en charge le courant I_{L}. L'inductance LA, maintenant connectée entre le point M, au potentiel +V/2, et la sortie S, maintenue au potentiel +V à travers le commutateur T1, voit le courant I_{A} qui la traverse diminuer linéairement. Lorsqu'il s'annule, le commutateur auxiliaire T1 se bloque. On emploie pour cette raison un commutateur de type thyristor, qui possède la propriété de se bloquer lorsque le courant qui le traverse s'annule, ou toute combinaison de composants équivalente, un transistor ou un IGBT en série avec une diode, par exemple.

Le basculement dans l'autre sens, pour revenir à la situation initiale s'accomplit de façon similaire, en ayant recours au circuit auxiliaire CA dont le commutateur auxiliaire T2 est déclenché, comme plus haut le commutateur auxiliaire T1. De plus, le commutateur S1 est alors commandé pour se bloquer également. La tension de la sortie S passe alors de +V à 0 volts dans une oscillation à l'issue de laquelle le commutateur auxiliaire T2 se bloque, la diode D2 devenant alors conductrice sous l'effet du courant I_{L}.

D'autres modes d'utilisation du bras de convertisseur décrit peuvent être envisagées, notamment celui de la figure 2 où la charge est connectée entre deux bras de convertisseur identiques à celui de la figure 1, les éléments du deuxième bras portant pour cela les mêmes références que celle du premier, affectée d'un "'". Additionnellement et en variante, les inductances LA et LA' sont connectées entre les commutateurs auxiliaires et le point M, au lieu d'être connectées entre ces commutateurs auxiliaires et le point S ; cela ne change rien du point de vue du fonctionnement ici décrit. D'autres modes de fonctionnement peuvent être appliqués dans un convertisseur à deux bras tel que celui de la figure 2, notamment un fonctionnement en onduleur. Le fonctionnement de chacun des deux bras est calqué sur ce que l'on vient de décrire. Dans le fonctionnement en hacheur, le fonctionnement du bras de gauche implique alternativement la diode D2 et le commutateur T1, tandis que, en synchronisme, le fonctionnement du bras de droite implique la diode D1' et le commutateur T2'. Dans le fonctionnement en onduleur, après une alternance positive, ou plusieurs parties d'une alternance positive, conformes à ce que l'on vient d'exprimer, une alternance négative impliquera, d'un côté, la diode D1, puis le commutateur T2 et, de l'autre côté, la diode D2', puis le commutateur T1.

Dans ces différents cas, le basculement de tension de la sortie S d'un bras de convertisseur a lieu sans pertes si la tension sur cette sortie S passe effectivement de 0 à +V volts, c'est-à-dire si la tension aux bornes du circuit auxiliaire CA s'inverse, c'est-à-dire encore si la tension au point M est bien égale à +V/2. Pour cela, les capacités des condensateurs CV1 et CV2 du diviseur de tension DC doivent être suffisamment grandes, la symétrie des composants impliqués dans les phases de conduction du circuit auxiliaire doit être quasi-parfaite, de même que les pertes résistives dans ce circuit auxiliaire. L'expérience montre que ces conditions sont difficiles à remplir et cela constitue un problème.

En effet, toute imperfection dans ce qui précède se traduit dans le fait qu'à la fin de l'alternance de l'oscillation considérée, la tension au point S n'est pas +V/2, mais une tension inférieure, de sorte que la différence de potentiel entre les bornes du commutateur principal S1 n'est pas nulle et que celui-ci est rendu conducteur alors que subsiste une tension résiduelle à ses bornes, laquelle causera une dissipation d'énergie dans le commutateur principal, préjudiciable en ce que la chaleur résultante devra être évacuée et en ce que le rendement du convertisseur en sera amoindri.

Néanmoins, comme de telles imperfections sont inévitables, une solution classique est de les accepter et de dimensionner le convertisseur de puissance en conséquence. Se pose alors, toutefois, le problème additionnel de déterminer quand doit être rendu conducteur le commutateur principal ; puisque la tension ne s'annule pas à ses bornes, on ne peut envisager de détecter le passage par 0 de la tension à ses bornes pour le rendre conducteur, technique qui présentait l'avantage d'obtenir à coup sûr l'avantage d'une commutation sans pertes. La solution classique à ce problème additionnel consiste à rendre conducteur le commutateur principal lorsque la tension à ses bornes passe en dessous d'un seuil de tension prédéterminé. L'avantage est alors que l'on est sûr de ne pas dépasser des pertes maximales définies et donc de ne pas surcharger le convertisseur.

La présente invention part de l'observation que l'application de cette solution classique conduit à accepter des pertes maximales pour des raisons de sécurité, alors qu'en fait, cela est généralement excessif.

En effet, dans la construction d'un convertisseur, les composants utilisés présentent des dispersions à l'intérieur de tolérances définies. Le calcul du seuil ci-dessus se fait donc en considérant le cas le plus défavorable correspondant à de telles tolérances. Fixer le seuil au cas par cas demanderait des mesures spécifiques en fabrication et au test, ainsi que des moyens pour définir un seuil ajustable. Cela n'est pas viable économiquement. Par ailleurs, la marche d'un convertisseur ne s'effectue pas toujours à charge maximale ; c'est en particulier le cas dans le fonctionnement en courant alternatif, mais aussi dans la plupart des applications en courant continu. A nouveau, le seuil est fixé de manière à répondre à des conditions de marche les plus défavorables qui ne sont que rarement recontrées et la satisfaction des besoins de sécurité se traduit encore par un perte d'efficacité excessive.

L'invention propose donc au problème additionnel posé une solution plus satisfaisante, ne comportant pas d'exigences économiquement inacceptables, procurant des avantages importants en termes de rendement du convertisseur de puissance.

Selon l'invention, le convertisseur de puissance défini précédemment comprend des moyens pour détecter, dans un processus de basculement destiné à la mise en conduction d'un commutateur principal visé et comprenant à cette fin une mise en conduction du circuit auxiliaire, une oscillation de courant entre ladite inductance auxiliaire et lesdits condensateurs de basculement, puis l'interruption de ce courant d'oscillation, et pour causer la mise en conduction dudit commutateur principal visé, en réponse à ladite interruption.

L'invention est ainsi basée sur le fait que la tension aux bornes des condensateurs est minimale à la fin d'une demi-période d'oscillation, lorsque le courant d'oscillation s'annule. C'est alors le moment optimal pour mettre en conduction le commutateur principal visé, les pertes étant minimales.

Cette caractéristique est suggérée dans l'article intitulé "Control Complexities Related to High Power Resonant Inverters", de P. P. Mok et al, paru dans la publication P.E.S.C. 96 de l'I.E.E.E., en juin 1996. Il y est question, à propos du convertisseur de la figure 2c, qui est un convertisseur de puissance à commutation douce, de rendre conducteur un commutateur principal (bas de la colonne de gauche, page 1045) lorsque le condensateur de basculement connecté à ses bornes est complètement déchargé ; pour détecter ce moment, il est envisagé un instant d'évaluer le courant dans le condensateur (haut de la colonne de droite, même page), éventualité immédiatement rejetée en faveur d'une évaluation de tension plus facile à réaliser. Le problème additionnel auquel s'intéresse la présente invention n'y est pas même évoqué. Le moyen qui consiste à évaluer le courant dans le condensateur de basculement, s'il y est mentionné pour être immédiatement rejeté, n'est à coup sûr pas présenté comme susceptible de résoudre ledit problème additionnel.

Selon l'invention, ladite détection comprend une évaluation quasi-permanente du courant dans ledit circuit auxiliaire et dans un circuit de charge, la différence entre ces deux courants représentant ledit courant d'oscillation.

De préférence, ladite détection comprend une évaluation quasi-permanente du courant dans lesdits condensateurs de basculement et en particulier de l'extinction de ce courant.

Ce qui précède concerne des convertisseurs de puissance à un ou deux bras, c'est-à-dire à un ou deux niveaux de tension. On connaît également, par l'article "Three level auxiliary resonant commutated pole inveter for high power applications" de J. G. Cho et al,publié dans la revue IEEE PESC 1996, pages 1019 à 1026, un convertisseur a trois niveaux de tension généralement similaire aux précédents. Des convertisseurs de puissance à plus de trois niveaux sont également concevables de façon similaire.. Le même problème de détermination des conditions optimales du déclenchement des commutateurs pricinpaux se pose dans les circuits de commutation principaux de tous les niveaux de tels convertisseurs à trois niveaux ou plus. L'invention s'applique dans ces types de convertisseurs, conformément à ce qui vient d'être décrit, pour tous les commutateurs principaux qu'ils contiennent.

Les différents objets et caractéristiques de l'invention seront maintenant exposés de façon plus détaillée dans la description qui va suivre d'un exemple de mise en oeuvre de l'invention, fourni à titre d'exemple non limitatif, description faite en se référant aux figures annexées qui représentent :
- la figure 1, déjà décrite, le schéma de principe d'un bras de convertisseur de puissance de type connu, auquel s'applique la présente invention,
- la figure 2, déjà décrite également, le schéma de principe d'un convertisseur de puissance de type connu, auquel s'applique la présente invention,
- la figure 3, un convertisseur de puissance conforme à la figure 1 et comprenant des moyens pour commander la mise en conduction des commutateurs principaux conformément à la présente invention,
- la figure 4, un convertisseur de puissance à trois niveaux dans lequel s'applique la présente invention.

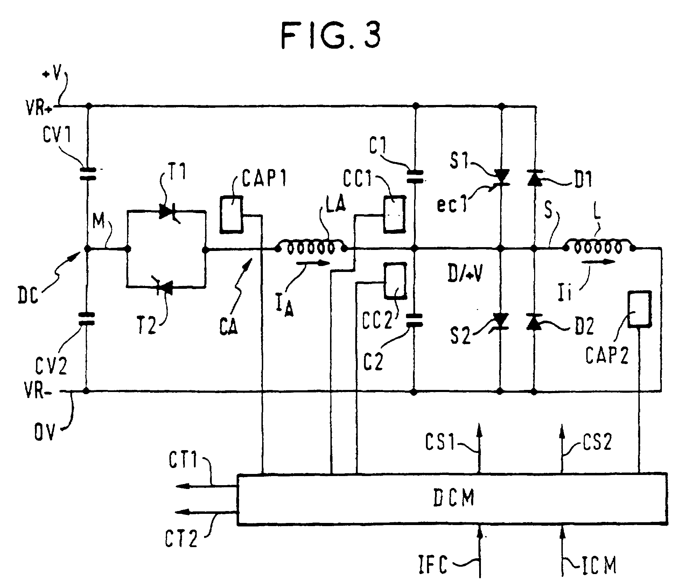

L'exemple de mise en oeuvre de l'invention représenté à la figure 3 est destiné à commander le fonctionnement du bras de convertisseur de la figure 1, ou celui de l'un des bras de convertisseur de la figure 2. C'est ainsi que le dispositif de la figure 3 comprend des capteurs de courant permettant une évaluation quasi-permanente du courant dans le conducteur auprès duquel ils sont disposés, dont un premier capteur CAP1, associé au circuit auxiliaire CA, et évaluant plus particulièrement le courant dans l'inductance auxiliaire LA, un deuxième capteur CAP2, faisant de même en ce qui concerne le courant dans la charge, et/ou un troisième capteur CC1 et un quatrième capteur CC2, évaluant respectivement le courant dans les condensateurs de basculement C1 et C2. Ces capteurs sont connectés à un dispositif de commande de marche DCM qui reçoit par ailleurs des instructions de commande de marche par une entrée ICM et d'autres informations sur le fonctionnement du convertisseur par une entrée IFC ; il fournit notamment les signaux de commande CT1 et CT2 qui commandent le fonctionnement des commutateurs auxuliaires T1 et T2, ainsi que les signaux CS1 et CS2 qui commandent le fonctionnement des commutateurs principaux S1 et S2.

Les capteurs de courant sont bien connus dans la technique. On peut employer, dans la mise en oeuvre de la présente invention des capteurs à effet Hall disponible dans le commerce. La mise en oeuvre de l'invention demande dont peu de moyens, d'autant que deux capteurs seulement sont nécessaires, soit les capteurs CAP1, CAP2, soit les capteurs CC1, CC2.

De façon connue et comme exposé au début de ce texte, le dispositif de commande de marche DCM, renseigné sur l'état du convertisseur par les signaux venant des capteurs représentés et, par d'autres signaux venant de capteurs non représentés lui parvenant sur son entrée IFC, contient un programme de marche et, en réponse à des signaux de commande d'une source externe non-représentée, lui parvenant sur son entrée ICM, commande le basculement du convertisseur d'un état de conduction dans un autre.

En reprenant l'exemple donné au début de ce texte, si l'on suppose le courant I_{L} établi par la diode D2, le basculement consistant à rendre conducteur le commutateur principal S1, le dispositif DCM rend d'abord conducteur le commutateur auxiliaire T1, le courant s'établit et croît dans le circuit auxiliaire CA, et le courant dans la diode D2 finit ainsi par s'annuler. A ce moment commence l'oscillation dont le courant va décharger le condensateur de basculement C1 et charger le condensateur de basculement C2. Le dispositif de commande de marche DCM détecte le début de cette oscillation par l'évolution de la tension au point S (communiquée par un capteur ad hoc), la diminution du courant dans le condensateur C2, détectée par le capteur CC2, ou l'augmentation du courant dans le condensateur C1, détectée par le capteur CC1, dans le cas où ces capteurs CC1 et CC2 sont prévus, ou encore par d'autres moyens que l'homme de métier imaginera sans peine.

A partir de cet instant, le dispositif DCM entre dans une phase dans laquelle il doit détecter l'interruption du courant d'oscillation, à la fin de la demi-période d'oscillation.

Cet événement, dans une forme de mise en oeuvre, sera détecté par le fait que les courants I_{A} et I_{L} dont l'évaluation est communiquée au dispositif de commande DCM par les capteurs CAP1 et CAP2 deviennent égaux. A cet instant précis, le dispositif de commande DCM fournit sur sa sortie CS1 un signal rendant conducteur le commutateur principal S1. La suite du fonctionnement est ensuite celle que l'on a décrite précédemment.

Dans une deuxième forme de mise en oeuvre, cet événement est détecté par le fait que s'annule le courant dans le condensateur de basculement C1, détecté par le capteur CC1, ou le courant dans le condensateur de basculement C2, détecté par le capteur CC2. Cette deuxième solution est équivalente à la précédente.

L'homme de métier peut trouver d'autres moyens encore pour détecter cet événement. L'invention consiste essentiellement en ce que l'on se sert de cet événement, dûment détecté, pour commander la mise en conduction du commutateur principal dont il s'agit.

Bien entendu, sans qu'il soit nécessaire de le décrire en détail, des moyens correspondant permettront de commande dans les mêmes conditions le fonctionnement de l'autre commutateur principal S2.

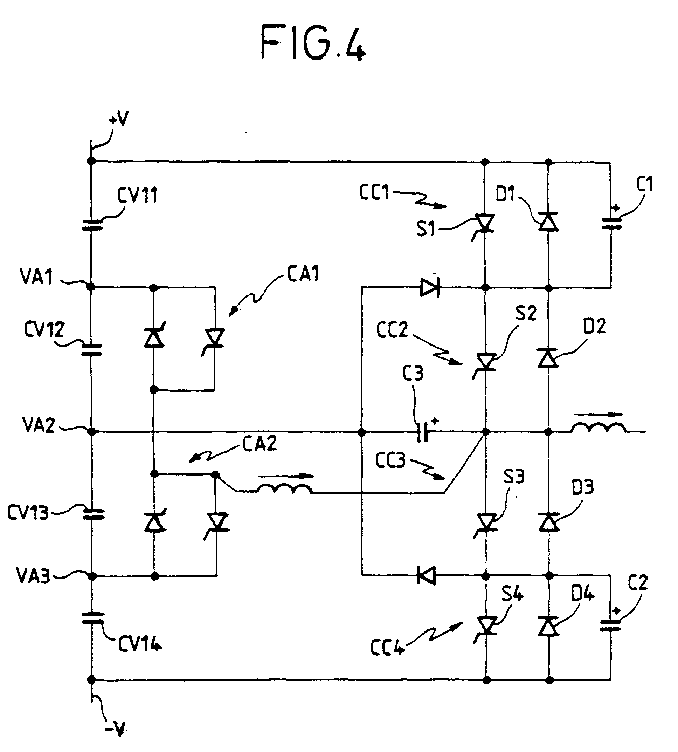

De même, on a représenté à la figure 4 un convertisseur à trois niveaux du type décrit dans l'article "Three level auxiliary resonant commutated pole inveter for high power applications" de J. G. Cho et al déjà mentionné. L'invention s'applique dans chacun des circuits de commande CC1 (commutateur principal S1 et diode de roue libre D1), CC2 (commutateur principal S2 et diode de roue libre D2), CC3 (commutateur principal S3 et diode de roue libre D3), CC4 (commutateur principal S4 et diode de roue libre D4), en rapport avec le courant chargeant les condensateurs C1, C2, C3, sous la commande des circuits auxiliaires CA1, CA2, couplés à des prises VA1, VA2, VA3, d'un diviseur de tension capacitif CV11, CV12, CV13, CV14, par des moyens non représentés mais en tout point semblables à ceux qui viennent d'être décrits en se reportant aux figures 1 à 3, comme le comprendra aisément l'homme de métier.

La commande de commutateur principal ainsi améliorée permet de rendre un commutateur principal conducteur alors que la tension résiduelle a ses bornes est toujours minimale et donc de limiter en conséquence les pertes du convertisseur de puissance, ce qui permet encore, à technologie égale d'en augmenter les performances.

## Revendications

1. Convertisseur de puissance comprenant au moins un bras incluant, entre un rail positif (VR+) et un rail négatif (VR-)
- deux commutateurs principaux (S1 et S2) permettant de connecter respectivement une sortie (S) menant à une charge (L), soit au rail positif (VR+), soit au rail négatif (VR-) ;
- deux diodes de roue libre (D1 et D2) permettant le maintien du courant dans la charge (L) en couplant respectivement la sortie (S) au rail positif (VR+) ou au rail négatif (VR-),
- deux condensateurs de basculement (C1 et C2) entre la sortie (S) et, respectivement, le rail positif (VR+) et le rail négatif (VR-),
- un circuit auxiliaire (CA) comprenant notamment une inductance auxiliaire (LA) en série avec deux commutateurs auxiliaires à conduction unidirectionnelle opposés (T1 et T2), couplé entre la sortie (S) et un point milieu (M) d'un diviseur de tension capacitif (DC) comprenant lui-même deux condensateurs diviseurs (CV1 et CV2) connectés en série entre les rails positif (VR+) et négatif (VR-) et fournissant en ce point milieu, nominalement, une tension médiane par rapport à celles des rails positif (VR+) et négatif (VR-),
convertisseur comprenant en outre, des moyens (CAP1, CAP2 ; CC1, CC2 ; DCM) pour détecter, dans un processus de basculement destiné à la mise en conduction d'un commutateur principal visé (S1 ; S2) et comprenant à cette fin une mise en conduction du circuit auxiliaire (CA), une oscillation de courant entre ladite inductance auxiliaire (LA) et lesdits condensateurs de basculement (C1, C2), puis l'interruption de ce courant d'oscillation, et pour causer la mise en conduction dudit commutateur principal visé (S1 ; S2), en réponse à ladite interruption,
**caractérisé en ce que** ladite détection comprend une évaluation quasi-permanente du courant dans ledit circuit auxiliaire (CA) et dans le circuit de charge (L), la différence entre ces deux courants représentant ledit courant d'oscillation.

2. Convertisseur conforme à la revendication 1, **caractérisé en ce que** ladite détection comprend une évaluation quasi-permanente du courant dans lesdits condensateurs de basculement (C1, C2) et en particulier de l'extinction de ce courant.

3. Application des dispositions faisant l'objet de l'une quelconque des revendications précédentes dans les différents étages d'un convertisseur de puissance à trois ou plus niveaux de tension.

## Patentansprüche

1. Leistungswandler, enthaltend mindestens einen Arm, der zwischen einer positiven Schiene (VR+) und einer negativen Schiene (VR-)
- zwei Hauptschalter (S 1 und S2), die es ermöglichen, einen Ausgang (S), der eine Ladung (L) führt, jeweils entweder mit der positiven Schiene (VR+) oder mit der negativen Schiene (VR-) zu verbinden;
- zwei Freilaufdioden (D1 und D2), welche die Aufrechterhaltung des Stroms in der Ladung (L) ermöglichen, indem sie den Ausgang (S) jeweils mit der positiven Schiene (VR+) oder mit der negativen Schiene (VR-) koppeln,
- zwei Umschaltkondensatoren (C1 und C2) zwischen dem Ausgang (S) und der positiven Schiene (VR+) bzw. der negativen Schiene (VR-),
- einen Hilfsstromkreis (CA) enthält, der insbesondere einen induktiven Hilfswiderstand (LA) in Reihenschaltung mit zwei gegenüberliegenden, in einer Richtung leitenden Hilfsschaltern (T1 und T2) enthält, die zwischen den Ausgang (S) und einen Mittelpunkt (M) eines Spannungsteilerkondensators (DC) geschaltet sind, der selbst zwei Spannungsteilerkondensatoren (CV1 und CV2) enthält, die zwischen der positiven Schiene (VR+) und der negativen Schiene (VR-) in Reihe geschaltet sind, und an diesem Mittelpunkt nominal eine Mittelwertspannung im Vergleich zu derjenigen der positiven Schiene (VR+) und der negativen Schiene (VR-) liefert,
wobei der Wandler unter anderem Mittel (CAP1, CAP2; CC1, CC2; DCM) enthält, um bei einem Umschaltvorgang, der dazu bestimmt ist, einen bestimmten Hauptschalter (S1; S2) in einen leitenden Zustand zu versetzen und der es zu diesem Zweck einschließt, den Hilfsstromkreis (CA) in einen leitenden Zustand zu versetzen, eine Schwingung des Stroms zwischen dem induktiven Hilfswiderstand (LA) und den Umschaltkondensatoren (C1, C2) und anschließend die Unterbrechung dieses Schwingstroms zu erfassen und um ansprechend auf die Unterbrechung den bestimmten Hauptschalter (S1; S2) in einen leitenden Zustand zu versetzen,
**dadurch gekennzeichnet, dass** die Erfassung eine quasi-permanente Bewertung des Stroms im Hilfsstromkreis (CA) und im Lastkreis (L) umfasst, wobei die Differenz zwischen den beiden Strömen den Schwingstrom darstellt.

2. Wandler nach Anspruch 1, **dadurch gekennzeichnet, dass** die Erfassung eine quasi-permanente Bewertung des Stroms in den Umschaltkondensatoren (C1, C2) und insbesondere des Abklingens dieses Stroms umfasst.

3. Anwendung der Einrichtungen, die den Gegenstand eines der vorhergehenden Ansprüche bilden, in den verschiedenen Stufen eines Leistungswandlers mit drei oder mehr Spannungspegeln.

## Claims

1. A power converter comprising at least one arm including, between a positive rail (VR+) and a negative rail (VR-):
• two main switches (S1 and S2) enabling an outlet (S) leading to a load (L) to be connected either to the positive rail (VR+) or the negative rail (VR-);
• two free-wheel diodes (D1 and D2) enabling the current through the load (L) to be maintained by coupling the outlet (S) respectively to the positive rail (VR+) or to the negative rail (VR-);
• two snubber capacitors (C1 and C2) between the outlet (S) and, respectively, the positive rail (VR+), and the negative rail (VR-); and
• an auxiliary circuit (CA) comprising, in particular, an auxiliary inductor (LA) in series with two oppositely-directed one-way auxiliary switches (T1 and T2) coupled between the outlet (S) and a midpoint (M) of a capacitive voltage divider (DC) itself comprising two voltage-dividing capacitors (CV1 and CV2) connected in series between the positive rail (VR+) and the negative rail (VR-) and delivering at said midpoint, a voltage that is nominally a midpoint voltage compared with the voltages of the positive rail (VR+) and of the negative rail (VR-),
the converter further comprising means (CAP1, CAP2; CC1, CC2; DCM) for detecting current oscillation between said auxiliary inductor (LA) and said snubber capacitors (C1, C2) in a switchover process intended for causing a corresponding main switch (S1; S2) to be switched on, and including, for this purpose, the switching on of an auxiliary circuit (CA), after which said oscillation current is interrupted, and to cause said corresponding main switch (S1; S2) to be rendered conductive, in response to said interrupt,
the converter being **characterized in that** said detection comprises evaluating on a substantially continuous basis the current flowing through said auxiliary circuit (CA) and in the load circuit (L), with the difference between the two currents representing said oscillation current.

2. A converter according to claim 1, **characterized in that** said detection comprises substantially continuously evaluating the current flowing through said snubber capacitors (C1, C2) and in particular when said current becomes zero.

3. Application of the dispositions constituting the subject matter of any preceding claim, to the various stages of a power converter having three or more voltage levels.
